# EUROPEAN PATENT APPLICATION

(11) **EP 2 402 593 A1**
(43) Date of publication of application: **04.01.2012**
(21) Application number: 09840801.6
(22) Date of filing: 27.02.2009
(51) Int. Cl.: F03D 1/06, F03D 11/00

(54) **WIND DRIVEN GENERATOR**

(71) Applicant: Mitsubishi Heavy Industries, Ltd., Tokyo 108-8215 (JP)
(72) Inventor: SATO, Shinsuke, Nagasaki, Nagasaki-ken 851-0392 (JP); HIRAI, Shigeto, Nagasaki, Nagasaki-ken 851-0392 (JP)
(74) Representative: Intès, Didier Gérard André
(86) International application number: PCT/JP2009/053744
(87) International publication number: WO 2010/097948

(57) **Abstract**

A first wind driven generator 10A according to an embodiment of the present invention includes: a rotor head 12 having wind turbine blades 11 attached thereto; a nacelle 14 that pivotally supports the rotor head 12; a tower that supports the nacelle 14; an opening portion 16 that is provided on a tip end of the rotor head 12 and introduces outside air; and a plurality of air-supply acceleration guides 17A that are provided on an outer circumference of the opening portion 16 of the rotor head 12 and collect the outside air in the opening portion 16. The outside air can be actively taken in the rotor head 12 from the opening portion 16 by causing the air-supply acceleration guides 17A to rotate to follow rotation of the rotor head 12. Inside of the rotor head 12 can be efficiently cooled without any need of new motive power because the outside air taken in the rotor head 12 can increase heat release from a surface of a rotor-head cast metal 22.

## Description

### TECHNICAL FIELD

The present invention relates to a wind driven generator that produces electricity using a wind turbine that converts wind as natural energy into a rotational force.

### BACKGROUND ART

Conventionally, there has been known a wind driven generator that produces electricity using a wind force that is natural energy. Wind driven generator installations in which the wind force acts on a plurality of turbine blades to generate a rotational force, which drives an electric generator via a rotor head, are established side by side at many locations at a high wind velocity such as not only plain regions but also high grounds such as on a hill and at the top of a mountain or on the sea, thereby providing a wind driven generator with high-power generation capability.

The conventional wind driven generator is configured to provide, in a nacelle installed on a tower, a rotor head to which turbine blades are attached, a main shaft connected to the rotor head to rotate integrally with the rotor head, a speed-up gear connected to the main shaft rotating to follow the action of the wind force on the wind turbine blades, and an electric generator driven by shaft power of the speed-up gear. In the wind driven generator with such a configuration, the rotor head that converts a wind force into rotational power and equipped with the wind turbine blades and the main shaft rotate to generate the shaft power, and the shaft power the rotational speed of which is increased is transmitted to the electric generator via the speed-up gear connected to the main shaft. Accordingly, it is possible to produce electricity while using the shaft power obtained by converting the wind force into the rotational force as a driving source of the electric generator and using the wind force as motive power of the electric generator.

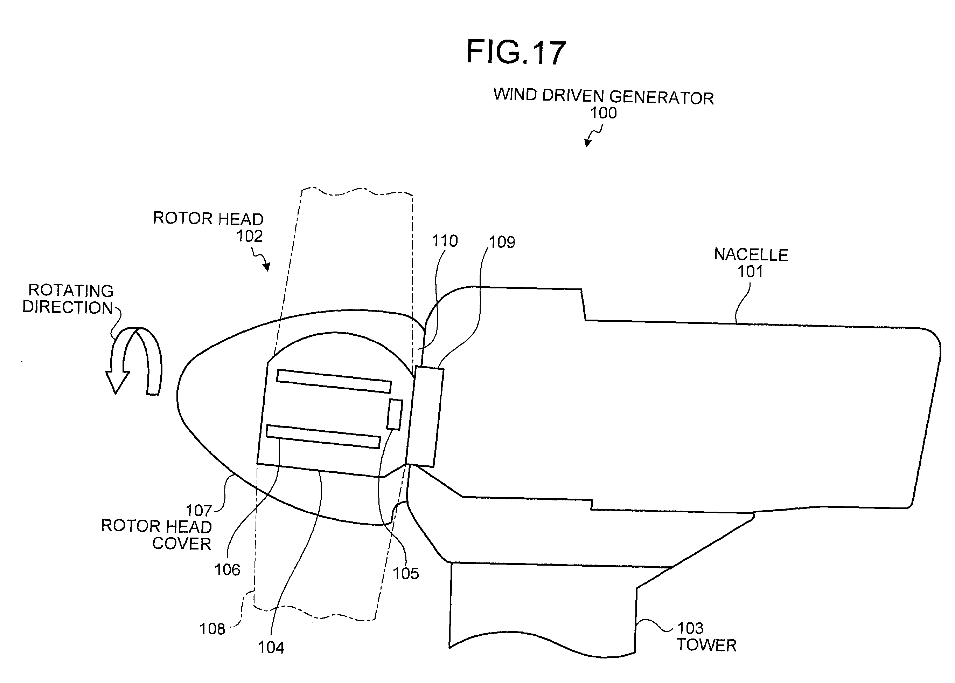

Fig. 17 is an example of a configuration of a conventional wind driven generator 100. As shown in Fig. 17, the conventional wind driven generator 100 is configured to include a nacelle 101, a rotor head 102 on a rotation side with respect to the nacelle 101, and a tower 103 that supports the nacelle 101. An internal device 105 and a hydraulic pitch cylinder 106 that generate heat are accommodated and installed in a rotor-head cast metal 104, and an exterior of the rotor-head cast metal 104 is covered with a rotor head cover 107. Examples of the internal device 105 include a control device that quickly and accurately changes a blade pitch of turbine blades 108 according to variations in wind velocity. The internal device 105 is configured to include control devices such as a control panel that performs pitch control and a power supply of the control devices.

Further, it is necessary to cool down the inside of the rotor head 102 because an internal temperature of the rotor head 102 rises due to heat input from a main shaft bearing 109 and heat generation in the internal device 105 and the hydraulic pitch cylinder 106. However, because of rotation of the rotor head 102, a cooling system needs to be provided independently of a device side provided in the nacelle 101 but has only a limited power supply capacity. Moreover, while the nacelle 101 is spatially connected to the rotor head 102 via a communication path 110, the air hardly circulates between the nacelle 101 and the rotor head 102. However, most of the air the temperature of which rises by the heat generation in the rotor head 102 remains in the rotor head 102 because of closure of the inside of the rotor head 102. Furthermore, except for the communication path 110, the inside of the rotor head 102 is airtightly closed so as to protect precision devices such as the internal device 105 and the hydraulic pitch cylinder 106 from rainwater or the like.

To allow the internal device 105 to normally operate and to continue producing electricity, sufficient temperature management such as cooling of the inside of the rotor head 102 is required.

As means for cooling a rotor head of a wind driven generator of this type, for example, there is disclosed a device that supplies outside air introduced from an opening provided on a side surface of a main body of a nacelle to a connecting portion that connects the nacelle to a rotor head, and cools the rotor head (see, for example, Patent Document 1).

Patent Document 1: Unites States Patent No. 7,427,814 B2

### DISCLOSURE OF INVENTION

### PROBLEM TO BE SOLVED BY THE INVENTION

However, the conventional wind driven generator has problems that heat release to outside air is too small to cool the rotor-head cast metal because of high airtightness of the rotor head, as described above.

Therefore, there has been a demand for having temperature management by cooling of the inside of the rotor head so as to improve reliability and durability of the wind driven generator.

In view of the above problems, an object of the present invention is to provide a wind driven generator having improved cooling efficiency of inside of a rotor head.

### MEANS FOR SOLVING PROBLEM

According to an aspect of the present invention, a wind driven generator includes: a rotor head having wind turbine blades attached thereto; a nacelle that pivotally supports the rotor head; a tower that supports the nacelle; an opening portion that is provided on a tip end of the rotor head and introduces outside air; and a plurality of air-supply acceleration guides that are provided on the opening portion of the rotor head and collect the outside air in the opening portion.

Advantageously, in the wind driven generator, each of the air-supply acceleration guides is obtained by inclining a flat or curved plate.

Advantageously, the wind driven generator includes a discharge port that is provided on a rear end portion of the rotor head and discharges outside air taken in the rotor head.

Advantageously, in the wind driven generator, the nacelle includes a nacelle air intake, and outside air introduced from the nacelle air intake cools inside of the nacelle.

Advantageously, the wind driven generator includes a discharge acceleration guide that is provided on the discharge port and accelerates discharging of outside air taken in the rotor head.

Advantageously, the wind driven generator includes a rectifying guide that is provided rearward of the opening portion and rectifies outside air to flow along an outer circumference of a rotor-head cast metal provided in the rotor head.

Advantageously, the wind driven generator includes a waterproof member provided between the rectifying guide and the rotor head.

### EFFECT OF THE INVENTION

According to the present invention, the wind driven generator includes: a rotor head having wind turbine blades attached thereto; a nacelle that pivotally supports the rotor head; a tower that supports the nacelle; an opening portion that is provided on a tip end of the rotor head and introduces outside air; and a plurality of air-supply acceleration guides that are provided on the opening portion of the rotor head and collect outside air in the opening portion. With this configuration, outside air can be actively taken in the rotor head, and the outside air taken in the rotor head can increase heat release from a surface of the rotor-head cast metal provided in the rotor head. Therefore, it is possible to efficiently cool the inside of the rotor head without any need of new motive power.
Therefore, it is possible to realize a wind driven generator having improved reliability and durability by improving cooling efficiency of the inside of the rotor head.

### BRIEF DESCRIPTION OF DRAWINGS

[Fig. 1] Fig. 1 is a simplified view of a configuration of a wind driven generator according to a first embodiment of the present invention.
[Fig. 2] Fig. 2 is a perspective view of simplified configurations of a rotor head and a nacelle.
[Fig. 3] Fig. 3 is a simplified cross-sectional view of the rotor head.
[Fig. 4] Fig. 4 is a simplified front view of the rotor head.
[Fig. 5] Fig. 5 is a simplified view of a configuration of an air-supply acceleration guide.
[Fig. 6] Fig. 6 is a simplified view of another configuration of the air-supply acceleration guide.
[Fig. 7] Fig. 7 is a simplified view of another configuration of the air-supply acceleration guide.
[Fig. 8-1] Fig. 8-1 depicts a state where air-supply acceleration guides are provided on a rotor head cover.
[Fig. 8-2] Fig. 8-2 is a cross-sectional view taken along a line A-A of Fig. 8-1.
[Fig. 9] Fig. 9 depicts another support state of air-supply acceleration guides to an opening portion.
[Fig. 10] Fig. 10 depicts a state where the rotor head is provided on a nozzle.
[Fig. 11] Fig. 11 is a simplified view of a configuration of a wind driven generator according to a second embodiment of the present invention.
[Fig. 12] Fig. 12 is a simplified view of a configuration of a rotor head of a wind driven generator according to a third embodiment of the present invention.
[Fig. 13] Fig. 13 is a simplified front view of the rotor head.
[Fig. 14] Fig. 14 is a simplified view of a configuration of a rotor head of a wind driven generator according to a fourth embodiment of the present invention.
[Fig. 15] Fig. 15 depicts a relation between a distance from a main shaft bearing and a temperature of a rotor-head cast metal.
[Fig. 16] Fig. 16 is a simplified view of a configuration of a rotor head of a wind driven generator according to a fifth embodiment of the present invention.
[Fig. 17] Fig. 17 is an example of a configuration of a conventional wind driven generator.

### EXPLANATIONS OF LETTERS OR NUMERALS

- 10A to 10E: first wind driven generator to fifth wind driven generator
- 11: wind turbine blade
- 12: rotor head (hub)
- 14: nacelle
- 15: tower
- 16, 27: opening portion
- 17A to 17C: air-supply acceleration guide
- 18: base
- 19: main shaft bearing
- 20: communication path
- 21: main shaft
- 22: rotor-head cast metal
- 23: rotor head cover
- 24: speed-up gear
- 25: electric generator
- 26: guide support member
- 28: hinge
- 29: support rod
- 30: nozzle
- 31: discharge port
- 32: nacelle air intake
- 33: discharge acceleration guide
- 41: rectifying guide
- 42: waterproof louver

### BEST MODE(S) FOR CARRYING OUT THE INVENTION

The present invention will be explained below in detail with reference to the accompanying drawings. The present invention is not limited to the embodiments. In addition, constituent elements in the following embodiments include those that can be easily assumed by persons skilled in the art or that are substantially equivalent.

### [First embodiment]

A wind driven generator according to a first embodiment of the present invention is described with reference to the drawings.

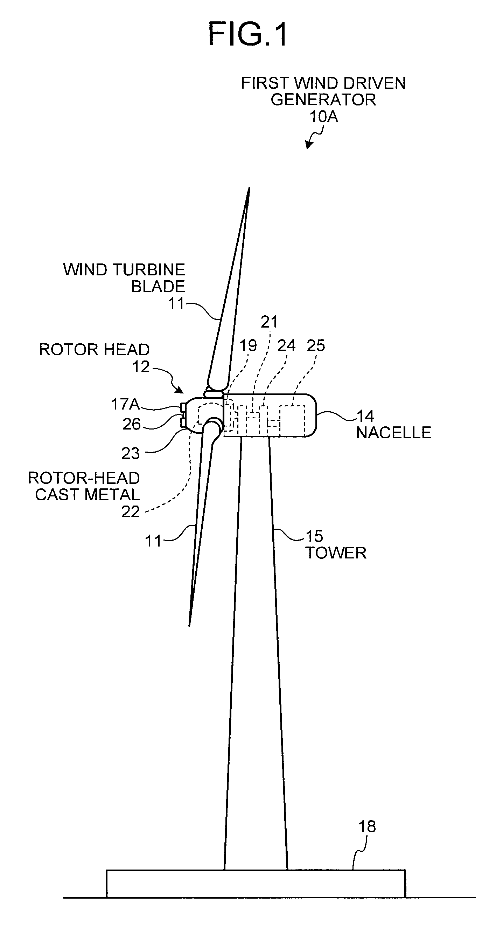

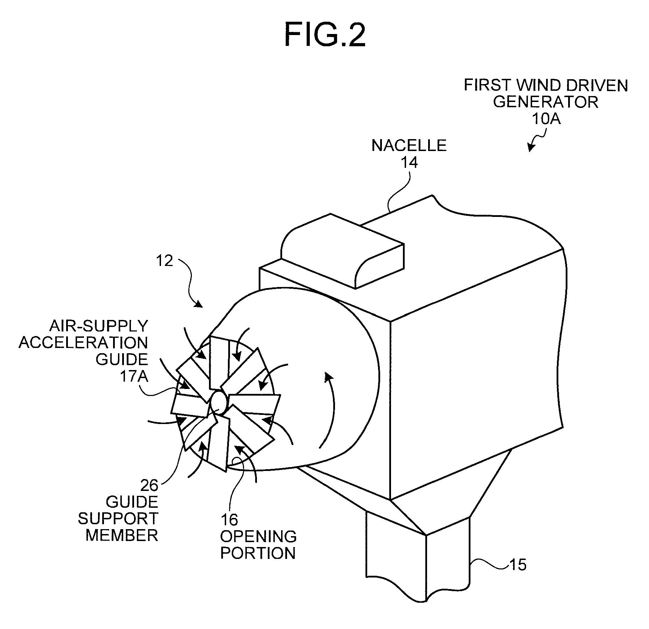

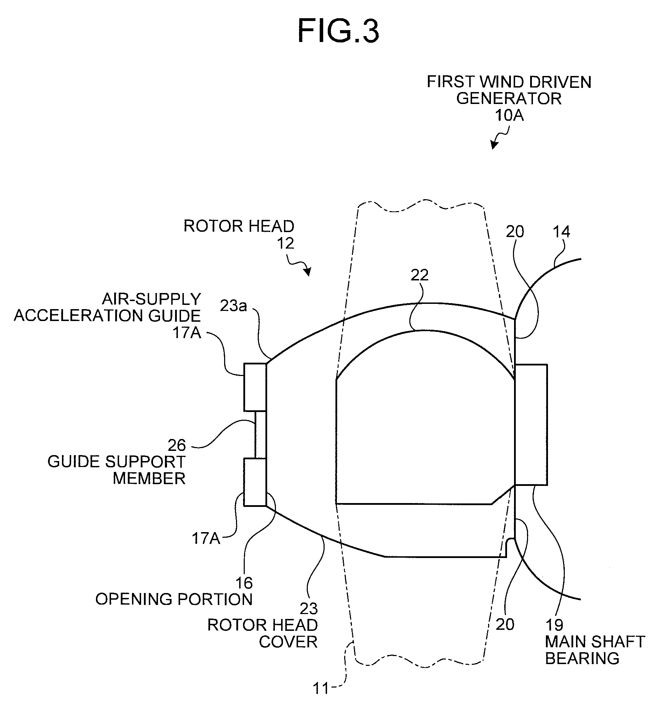

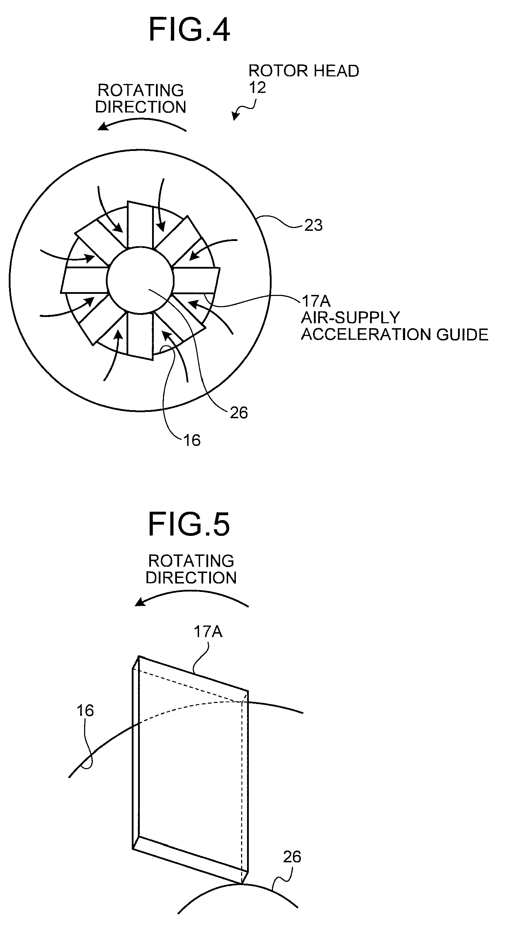

Fig. 1 is a simplified view of a configuration of the wind driven generator according to the first embodiment of the present invention, Fig. 2 is a perspective view of simplified configurations of a rotor head and a nacelle, Fig. 3 is a simplified cross-sectional view of the rotor head, Fig. 4 is a simplified front view of the rotor head, and Fig. 5 is a simplified view of a configuration of an air-supply acceleration guide.
As shown in Figs. 1 to 5, a wind driven generator 10A according to the present embodiment includes a rotor head (hub) 12 having wind turbine blades 11 attached thereto, a nacelle 14 that pivotally supports the rotor head 12, a support (tower) 15 that supports the nacelle 14, an opening portion 16 that is provided on a tip end of the rotor head 12 and introduces outside air, and a plurality of air-supply acceleration guides 17A that are provided on the opening portion 16 of the rotor head 12 and collect the outside air in the opening portion 16.
In the drawings, reference numeral 18 denotes a base for installing the tower, 19 denotes a main shaft bearing of a rotor-head cast metal, and 20 denotes a communication path for connecting the rotor head to the nacelle.

The rotor head 12 is configured to include a rotor-head cast metal 22 connected to a main shaft 21 to rotate, and a rotor head cover 23 that creates a predetermined space on an outer circumference of the rotor-head cast metal 22 and covers the rotor-head cast metal 22. A plurality of wind turbine blades 11 are attached to the rotor-head cast metal 22 radially of a direction of a rotation axis. A lifting force is generated on these wind turbine blades 11 by outside wind and the generated lifting force serves as motive power for rotating the rotor head 12 circumferentially with respect to the direction of the rotation axis.

Control devices (not shown) such as a hydraulic device and a control panel that perform pitch control over the wind turbine blades 11 as well as a power supply of the control devices are accommodated and installed in the rotor-head cast metal 22.

A driving/generation mechanism including, for example, an electric generator 25 connected to the rotor head 12 via a speed-up gear 24 coaxial to the rotor head 12 is accommodated and installed in the nacelle 14. By speeding up rotation of the rotor head 12 using the speed-up gear 24 and driving the electric generator 25, the electric generator 25 produces electric generator output.

Further, in the wind driven generator 10A according to the present embodiment, the opening portion 16 is provided on a tip end 23a of the rotor head cover 23 which tip end is also the tip end of the rotor head 12, and a plurality of air-supply acceleration guides 17 that collect outside air in the opening portion 16 are provided on the opening portion 16. The air-supply acceleration guides 17A are fixed by an edge portion of the opening and a guide support member 26 provided at the center of the opening portion 16, and fixed to the opening portion 16 radially around the guide support member 26. The air-supply acceleration guides 17A are not necessarily supported in a center impeller manner, and can be supported in a manner of being supported by either the edge portion of the opening or the guide support member 26.

Further, as shown in Fig. 5, each of the air-supply acceleration guides 17A is obtained by inclining a flat plate and fixing the inclined flat plate by the edge portion of the opening portion 16 and the guide support member 26 so as to make it possible to smoothly take outside air in the rotor head 12 from the opening portion 16. Therefore, outside air can be actively taken in the rotor head 12 from the opening portion 16 by causing a plurality of air-supply acceleration guides 17A to rotate to follow rotation of the rotor head 12.

There is no need of motive power for taking outside air in the rotor head 12 from the opening portion 16, because outside air can be actively taken in the rotor head 12 from the opening portion 16 only by providing a plurality of air-supply acceleration guides 17A on the opening portion 16 of the rotor head 12 and causing the air-supply acceleration guides 17A to rotate to follow the rotation of the rotor head 12.

Therefore, the first wind driven generator 10A according to the present embodiment is configured to include the opening portion 16 provided on the tip end of the rotor head 12, and a plurality of air-supply acceleration guides 17A that are provided on the opening portion 16 of the rotor head 12 and collect outside air in the opening portion 16, and configured so that the edge portion of the opening portion 16 and the guide support member 26 fix a plurality of air-supply acceleration guides 17A to the opening portion 16 radially about the guide support member 26. With this configuration, outside air can be actively taken in the rotor head 12 by causing the air-supply acceleration guides 17A to rotate to follow the rotation of the rotor head 12. It is possible to efficiently cool the inside of the rotor head 12 without any need of new motive power because outside air taken in this rotor head 12 can increase the heat release from a surface of the rotor head metal cast 22.

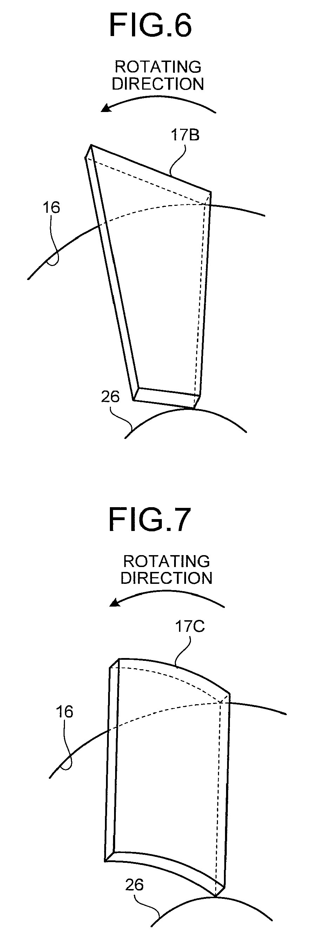

In the first wind driven generator 10A according to the present embodiment, both ends of each of the air-supply acceleration guides 17A are identical in length. Alternatively, for example, as shown in Fig. 6, it is possible to use air-supply acceleration guides 17B one side of each of which fixed to the guide support member 26 is shorter than one side thereof fixed to the edge portion of the opening portion 16 so as to facilitate introducing outside air into the opening portion 16.

Each of the air-supply acceleration guides 17A and 17B is obtained by inclining the flat plate and provided on the opening portion 16. However, the present invention is not limited thereto, but it suffices that the air-supply acceleration guide is formed so as to be able to smoothly take outside air in the rotor head 12 from the opening portion 16. For example, as shown in Fig. 7, an air-supply acceleration guide 17C made of a curved plate member curved toward the rotating direction of the rotor head 12 can be used and provided to be inclined between the edge portion of the opening portion 16 and the guide support member 26. With this configuration, it is possible to take outside air in the rotor head 12 from the opening portion 16 more actively by causing a plurality of air-supply acceleration guides 17C to rotate to follow the rotation of the rotor head 12.

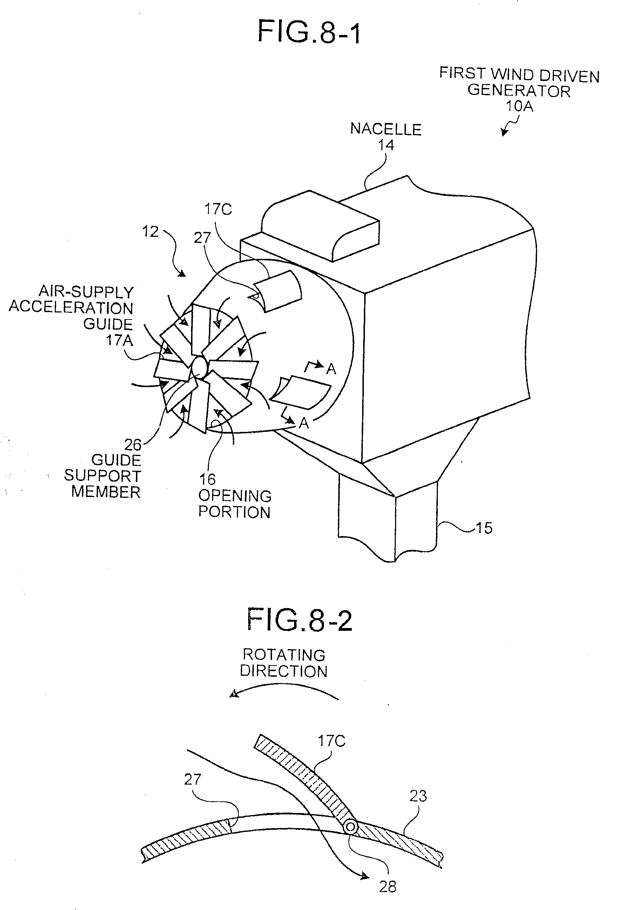

The air-supply acceleration guides 17A to 17C are not necessarily provided on the opening portion 16 on a front surface of the rotor head cover 23. Fig. 8-1 depicts a state where air-supply acceleration guides are provided on a side surface of the rotor head cover, and Fig. 8-2 is a cross-sectional view taken along a line A-A of Fig. 8-1. As shown in Figs. 8-1 and 8-2, a plurality of opening portions 27 can be provided at a predetermined interval circumferentially on the side surface of the rotor head cover 23 as well so as to be able to introduce outside air on the side surface of the rotor head cover 23 as well, and the air-supply acceleration guides 17C curved to correspond to a circumferential shape of the rotor head cover 23 can be provided for the opening portions 27, respectively. The side surface of the rotor head cover 23 refers to a surrounding wall surface of the rotor head cover 23 except for the front surface thereof provided with the opening portion 16. By providing the air-supply acceleration guide 17C on each of the opening portions 27 of the rotor head cover 23, it is possible to more efficiently take outside air in the rotor head 12 from the opening portions 27 to follow the rotation of the rotor head 12. It is thereby possible to increase the heat release from the surface of the rotor-head cast metal 22 and cool the inside of the rotor head 12 more efficiently.

Alternatively, each of the air-supply acceleration guides 17C can be connected to the rotor head cover 23 using such an opening/closing member as a hinge 28 so as to configure the air-supply acceleration guide 17C to be able to be freely opened or closed. By providing a hinge 29 on one end side of the opening portion 27 and configuring the air-supply acceleration guide 17C to be able to be freely opened or closed, the air-supply acceleration guide 17C can be closed and prevent entry of rainwater or the like when the rotor head 12 does not rotate, for example.

While the air-supply acceleration guide 17C is provided on each of the opening portions 27 of the rotor head cover 23, the present invention is not limited thereto, and the same member as the rotor head cover 23 can be provided on each of the opening portions 27 in place of the air-supply acceleration guide 17C. Furthermore, the same member as the rotor head cover 23 can be attached to the rotor head cover 23 so as to be able to be freely opened or closed using such an opening/closing member as the hinge 29 in place of the air-supply acceleration guide 17C.

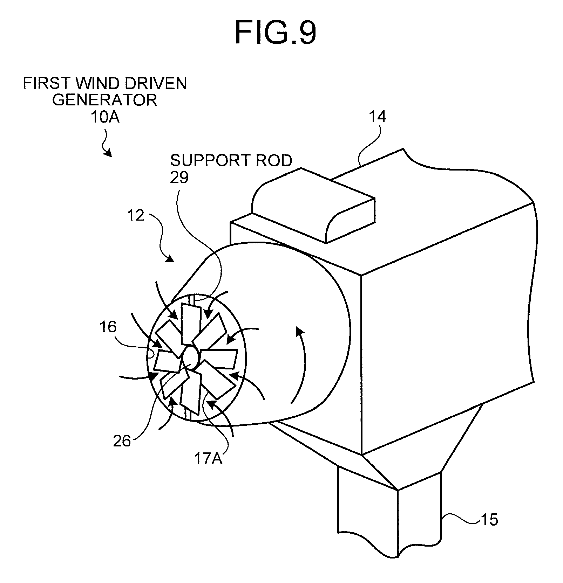

In the first wind driven generator 10A according to the present embodiment, a plurality of air-supply acceleration guides 17A are fixed by the edge portion of the opening portion 16 and the guide support member 26. However, the present invention is not limited thereto. As shown in Fig. 9, support rods 29 can be provided on the opening portion 16 and the air-supply acceleration guides 17A can be fixed to these support rods 29, respectively.

In the first wind driven generator 10A according to the present embodiment, the guide support member 26 for fixing a plurality of guides is provided in a central portion of the opening portion 16. However, the present invention is not limited thereto, and the guide support member 26 can be formed into a ring shape so that outside air can pass through a ring-shaped interior of the guide support member 26.

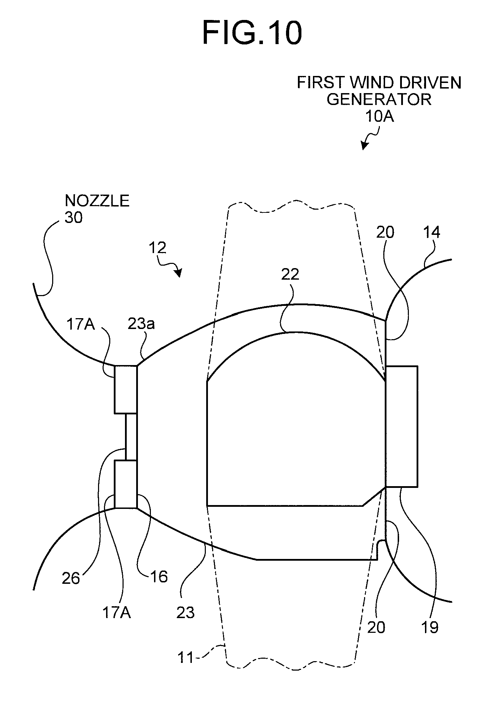

Further, in the first wind driven generator 10A according to the present embodiment, as shown in Fig. 10, a nozzle 30 can be provided on the edge portion of the opening portion 16 outside of the rotor head 12. With this configuration, outside air can be efficiently supplied into the opening portion 16.

As described above, in the first wind driven generator 10A according to the present embodiment, a plurality of air-supply acceleration guides 17A that collect outside air are provided on the opening portion 16 provided on the tip end of the rotor head 12, and the edge portion of the opening portion 16 and the guide support member 26 fix the respective air-supply acceleration guides 17A to the opening portion 16 radially about the guide support member 26. Because the air-supply acceleration guides 17A can actively take outside air in the rotor head 12 to follow the rotation of the rotor head 12, outside air taken in the rotor head 12 can increase the heat release from the surface of the rotor-head cast metal 22. Therefore, it is possible to efficiently cool the inside of the rotor head 12 without any need of new motive power.
In this way, it is possible to realize a wind driven generator having improved reliability and durability by improving cooling efficiency of the inside of the rotor head 12.

Further, the first wind driven generator 10A according to the present embodiment can be also employed in other installation locations such as on the sea, on the ground, or on a ship.

### [Second embodiment]

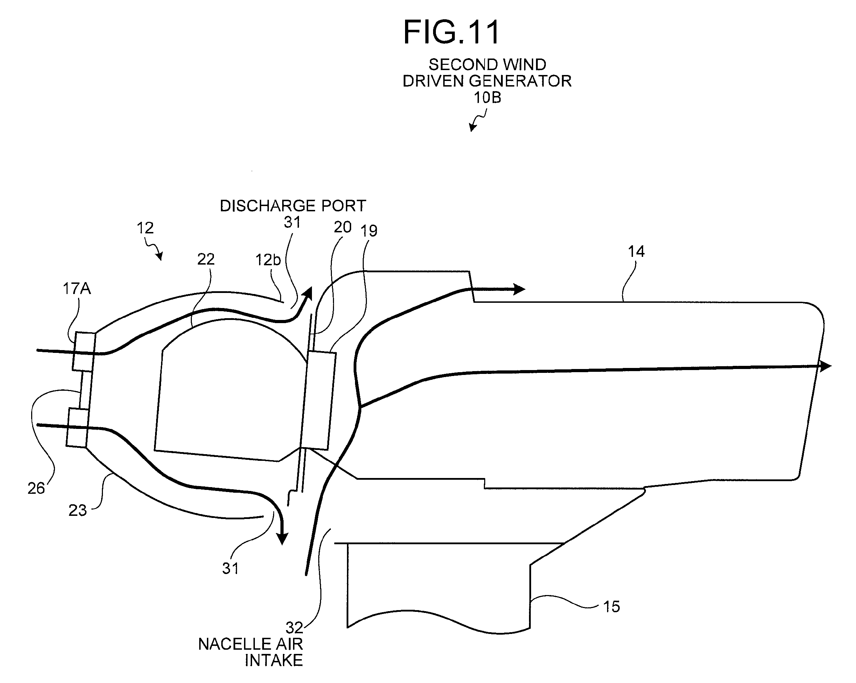

A wind driven generator according to a second embodiment of the present invention is described with reference to Fig. 11.
The wind driven generator according to the present embodiment is substantially identical in configuration to the first wind driven generator 10A according to the first embodiment shown in Fig. 1. Therefore, constituent elements identical to those of the first wind driven generator 10A according to the first embodiment shown in Fig. 1 are denoted by like reference numerals and redundant explanations thereof will be omitted.
Fig. 11 is a simplified view of a configuration of the wind driven generator according to the second embodiment of the present invention.
As shown in Fig. 11, a wind driven generator 10B according to the second embodiment is configured, as compared with the first wind driven generator 10A according to the first embodiment shown in Fig. 1, to discharge outside air taken in the rotor head 12 from backward of the rotor head 12.
That is, the second wind driven generator 10B according to the second embodiment includes discharge ports 31 that are provided on a rear end portion 12b of the rotor head 12 of the first wind driven generator 10A according to the first embodiment shown in Fig. 1 and discharge outside air taken in the rotor head 12.

By providing the air-supply acceleration guides 17A on the rotor head 12 and additionally providing the discharge ports 31 on the rear end portion 12b of the rotor head 12, outside air taken in the rotor head 12 can be actively discharged from the rear end portion 12b of the rotor head 12. Further, because outside and inside of the rotor head 12 have a relation of a positive pressure and a negative pressure therebetween, outside air is actively taken in the rotor head 12. Therefore, by efficiently discharging outside air taken in the rotor head 12, outside air can efficiently circulate in the rotor head 12. Accordingly, the heat release from the surface of the rotor-head cast metal 22 can be further increased and the inside of the rotor head 12 can be cooled more efficiently.

Further, it is possible to prevent the influence of outside air heated by the rotor-head cast metal 22 on the nacelle 14, because the air heated by the rotor-head cast metal 22 in the rotor head 12 is discharged from the discharge ports 31 and an amount of the heated air supplied into the nacelle 14 via the communication path 20 can be reduced. In addition, it is possible to prevent the influence of the heat generated in the nacelle 14 on the rotor-head cast metal 22 in the rotor head 12, because the air heated in the nacelle 14 can be discharged from the discharge ports 31 as well even when the air is supplied into the nacelle 14 via the communication path 20.

In the second wind driven generator 10B according to the present embodiment, the nacelle 14 includes a nacelle air intake 32 near the communication path 20 connected to the rotor head 12, for example, on a lower side of the nacelle 14, and outside air introduced from the nacelle air intake 32 cools the inside of the nacelle 14. The second wind driven generator 10B according to the present embodiment is thereby configured so that the rotor head 12 and the nacelle 14 can be cooled independently of each other. With this configuration, fresh outside air taken in the nacelle 14 from the nacelle air intake 32 can cool the inside of the nacelle 14, not the heated outside air supplied from the opening portion 16 via the communication path 20. That is, it is possible to further improve cooling efficiency because the rotor head 12 and the nacelle 14 are cooled via different routes, respectively. Furthermore, the position of the nacelle air intake is not limited to the lower side of the nacelle 14 but can be an upper side or a side surface of the nacelle 14, or even a combination of nacelle air intakes located at these positions can be used.

In the second wind driven generator 10B according to the present embodiment, the air-supply acceleration guides 17A are provided on the opening portion 16 so as to be able to actively take outside air in the rotor head 12. However, the present invention is not limited thereto, and outside air can be taken in the rotor head 12 from the opening portion 16 without providing the air-supply acceleration guides 17A on the opening portion 16.

### [Third embodiment]

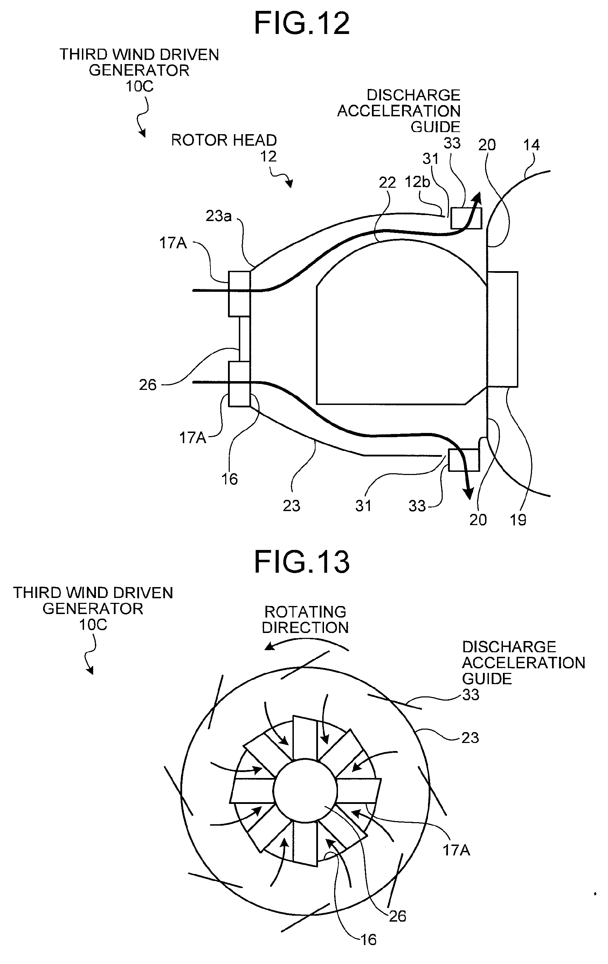

A wind driven generator according to a third embodiment of the present invention is described with reference to Figs. 12 and 13.
The wind driven generator according to the present embodiment is substantially identical in configuration to the first wind driven generator 10A according to the first embodiment shown in Fig. 1. Therefore, constituent elements identical to those of the first wind driven generator 10A according to the first embodiment shown in Fig. 1 are denoted by like reference numerals and redundant explanations thereof will be omitted.
Fig. 12 is a simplified cross-sectional view of a configuration of a rotor head of the wind driven generator according to the third embodiment of the present invention, and Fig. 13 is a simplified front view of the rotor head.
As shown in Figs. 12 and 13, a third wind driven generator 10C according to the third embodiment includes discharge acceleration guides 33 that are provided on the respective discharge ports 31 of the second wind driven generator 10B according to the second embodiment shown in Fig. 11 and accelerate discharging of outside air taken in the rotor head 12.

By providing the discharge acceleration guides 33 on the respective discharge ports 31 of the rotor head 12, outside air taken in the rotor head 12 can be actively discharged to outside of the rotor head 12 from the rear end portion 12b of the rotor head 12. With this configuration, it is possible to more efficiently introduce outside air into the rotor head 12 and discharge outside air taken in the rotor head 12, and to cause outside air to more efficiently circulate in the rotor head 12. As a result, it is possible to further increase the heat release from the surface of the rotor-head cast metal 22 and thus to more efficiently cool the inside of the rotor head 12.

In the third wind driven generator 10C according to the present embodiment, the air-supply acceleration guides 17A are provided on the opening portion 16 so as to be able to actively take outside air in the rotor head 12. However, the present invention is not limited thereto, and outside air can be taken in the rotor head 12 from the opening portion 16 without providing the air-supply acceleration guides 17A on the opening portion 16.

### [Fourth embodiment]

A wind driven generator according to a fourth embodiment of the present invention is described with reference to the drawings.
The wind driven generator according to the present embodiment is substantially identical in configuration to the first wind driven generator 10A according to the first embodiment shown in Fig. 1. Therefore, constituent elements identical to those of the first wind driven generator 10A according to the first embodiment shown in Fig. 1 are denoted by like reference numerals and redundant explanations thereof will be omitted.

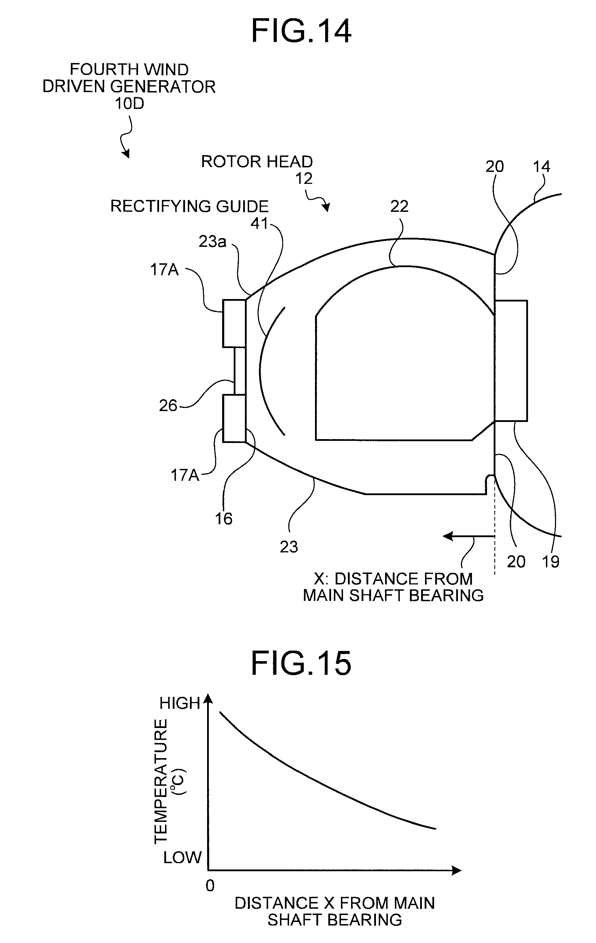

Fig. 14 is a simplified cross-sectional view of a configuration of a rotor head of the wind driven generator according to the fourth embodiment of the present invention.
As shown in Fig. 14, a fourth wind driven generator 10D according to the fourth embodiment includes a rectifying guide 41 that is provided rearward of the opening portion 16 within the rotor head 12 of the first wind driven generator 10A according to the first embodiment shown in Figs. 1 to 4, and rectifies outside air taken in the rotor head 12 to flow along outer circumferentially of the rotor-head cast metal 22 with which the internal device provided in the rotor head 12 is covered.

By providing the rectifying guide 41 between the opening portion 16 and the rotor-head cast metal 22, it is possible to cool the rotor-head cast metal 22 while reducing a pressure loss coefficient of outside air taken in the rotor head 12 and rectifying outside air to flow along outer circumferentially of the rotor-head cast metal 22.

Further, as shown in Fig. 15, as a distance X from the main shaft bearing 19 becomes longer, the temperature of the rotor-head cast metal 22 tends to fall. Therefore, heat exchange between the air in the rotor-head cast metal 22 and outside air introduced from the opening portion 16 is performed at a portion near the opening portion 16 of the rotor-head cast metal 22 as little as possible. Instead, outside air which is not subjected to heat exchange with the heat of the rotor-head cast metal 22 and the temperature of which does not rise is supplied to neighborhoods of an outer circumference of the rotor-head cast metal 22 closer to the main shaft bearing 19 as much as possible. It is thereby possible to more efficiently cool the rotor-head cast metal 22.

Therefore, by providing the rectifying guide 41 rearward of the opening portion 16 and forward of the rotor-head cast metal 22, outside air introduced from the opening portion 16 can be supplied to neighborhoods of the outer circumference of the rotor-head cast metal 22 closer to the main shaft bearing 19 as much as possible. Accordingly, it is possible to improve cooling efficiency of the rotor-head cast metal 22, further increase the heat release from the surface of the rotor-head cast metal 22, and more efficiently cool the inside of the rotor head 12.

In the fourth wind driven generator 10D according to the present embodiment, the air-supply acceleration guides 17A are provided on the opening portion 16 so as to be able to actively take outside air in the rotor head 12. However, the present invention is not limited thereto, and outside air can be taken in the rotor head 12 from the opening portion 16 without providing the air-supply acceleration guides 17A on the opening portion 16.

### [Fifth embodiment]

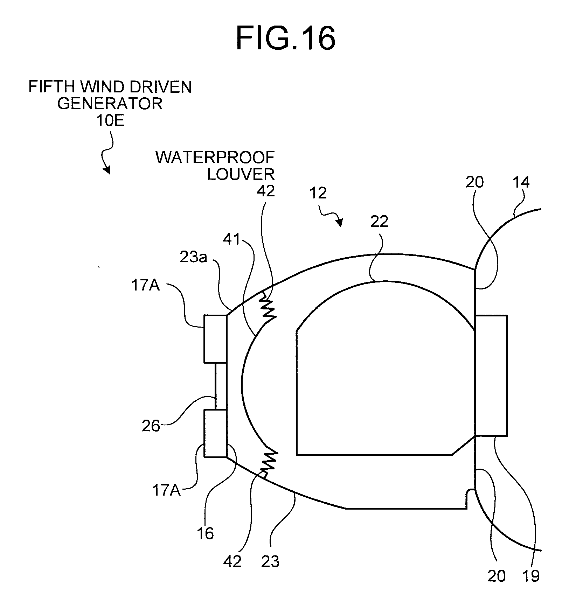

A wind driven generator according to a fifth embodiment of the present invention is described with reference to Fig. 16.
The wind driven generator according to the present embodiment is substantially identical in configuration to the first wind driven generator 10A according to the first embodiment shown in Fig. 1. Therefore, constituent elements identical to those of the first wind driven generator 10A according to the first embodiment shown in Fig. 1 are denoted by like reference numerals and redundant explanations thereof will be omitted.
Fig. 16 is a simplified view of a configuration of a rotor head of the wind driven generator according to the fifth embodiment of the present invention.
As shown in Fig. 16, a wind driven generator 10E according to the fifth embodiment includes waterproof louvers (waterproof members) 42 between the rectifying guide 41 of the fourth wind driven generator 10D according to the fourth embodiment shown in Fig. 14 and the rotor head 12.

By providing the waterproof louvers 42 between the rectifying guide 41 and the rotor head 12, it is possible to take outside air in the rotor head 12 and prevent entry of rainwater or the like from the opening portion 16.

Furthermore, while the waterproof louvers 42 are employed as the waterproof members in the present embodiment, it suffices that the waterproof members are those that can maintain ventilation of the inside of the rotor head 12 and that can prevent entry of the rainwater or the like from the opening portion 16, and the waterproof members are not limited thereto.

In the fifth wind driven generator 10E according to the present embodiment, the air-supply acceleration guides 17A are provided on the opening portion 16 so as to be able to actively take outside air in the rotor head 12. However, the present invention is not limited thereto, and outside air can be taken in the rotor head 12 from the opening portion 16 without providing the air-supply acceleration guides 17A on the opening portion 16.

### INDUSTRIAL APPLICABILITY

As described above, the wind driven generator according to the present invention is preferable for a wind driven generator that actively takes in outside air in a rotor head to cool the inside of the rotor head.

## Claims

1. A wind driven generator comprising:
a rotor head having wind turbine blades attached thereto;
a nacelle that pivotally supports the rotor head;
a tower that supports the nacelle;
an opening portion that is provided on a tip end of the rotor head and introduces outside air; and
a plurality of air-supply acceleration guides that are provided on the opening portion of the rotor head and collect the outside air in the opening portion.

2. The wind driven generator according to claim 1, wherein each of the air-supply acceleration guides is obtained by inclining a flat or curved plate.

3. The wind driven generator according to claim 1 or 2, comprising a discharge port that is provided on a rear end portion of the rotor head and discharges outside air taken in the rotor head.

4. The wind driven generator according to any one of claims 1 to 3, wherein the nacelle includes a nacelle air intake, and outside air introduced from the nacelle air intake cools inside of the nacelle.

5. The wind driven generator according to claim 3 or 4, comprising a discharge acceleration guide that is provided on the discharge port and accelerates discharging of outside air taken in the rotor head.

6. The wind driven generator according to any one of claims 1 to 5, comprising a rectifying guide that is provided rearward of the opening portion and rectifies outside air to flow along an outer circumference of a rotor-head cast metal provided in the rotor head.

7. The wind driven generator according to claim 6, comprising a waterproof member provided between the rectifying guide and the rotor head.
